# EUROPEAN PATENT APPLICATION

(11) **EP 4 212 646 A1**
(43) Date of publication of application: **19.07.2023**
(21) Application number: 21864475.5
(22) Date of filing: 07.09.2021
(51) Int. Cl.: C23C 18/16, B32B 15/08, C08K 3/10, C08L 101/00, C23C 18/31

(54) **PLATED MOLDED BODY OF THERMOPLASTIC RESIN COMPOSITION**

(30) Priority: 07.09.2020 JP 2020149954
(71) Applicant: Denka Company Limited, Tokyo 103-8338 (JP)
(72) Inventor: MIYAMA, Akira, Tokyo 103-8338 (JP); MASHIKO, Yoshihiro, Tokyo 103-8338 (JP)
(74) Representative: Gulde & Partner
(86) International application number: PCT/JP2021/032860
(87) International publication number: WO 2022/050424

(57) **Abstract**

A molded body having superior shielding performance (masking performance) with respect to low frequency region electromagnetic waves of 1 MHz or lower is provided. A plated molded body, including: a resin layer of a thermoplastic resin containing soft magnetic powder including Fe-Si-Al alloy; and a coating layer of a conductive metal is provided.

## Description

### TECHNICAL FIELD

The present invention relates to a plated molded body of a thermoplastic resin formulated with soft magnetic powder, the soft magnetic powder having a shielding performance to shield electromagnetic waves in low frequency region. The shielding performance suppresses electromagnetic wave noise by shielding or absorbing electromagnetic waves having a frequency of 1 MHz or lower (hereinafter frequently referred to as low frequency region electromagnetic waves) which is generated inside various electronic equipment, especially from power conversion equipment and data processing equipment installed in electrically driven vehicles.

### BACKGROUND

The unnecessary electromagnetic waves generated from various electronic equipment influence other electronic equipment and thus cause malfunction. In order to suppress such unfavorable effects of the unnecessary electromagnetic waves, electromagnetic wave shielding material is used.

As such electromagnetic wave shielding material, soft magnetic material has been suggested. Regarding such soft magnetic material, permalloy materials are generally known to show superior shielding performance with respect to electromagnetic waves having a frequency of several hundred MHz to several GHz.

Regarding the soft magnetic material, Fe-Si-Al based alloy found in 1937 can be mentioned. In addition, Fe-Si based alloy and Fe-Si-Cr based alloy are also known soft magnetic materials. These soft magnetic materials have been evaluated of its shielding performance with respect to electromagnetic waves having a frequency of 300 MHz to 3 GHz.

On the other hand, study on shielding material with respect to low frequency region electromagnetic waves having a frequency of 1 MHz or lower is very scarce. For example, Patent Literature 1 suggests a laminated body structured by forming a magnetic layer in between two or more carbon fiber reinforced resin layers, the magnetic layer formed by using a magnetic shielding coating having the soft magnetic powder dispersed in organic solvent. Patent Literature 2 suggests an electromagnetic field shielding sheet prepared by applying a soft magnetic coating onto a reticular structure followed by drying to allow the soft magnetic powder impregnated and fixed thereto.

In addition, a molded article obtained by providing a plating layer on the surface of a resin molded article has been suggested. Patent Literature 3 discloses a molded object which can maintain plating property and is superior in various mechanical characteristics and flame retardancy. Patent Literature 4 discloses a plated molded body which is obtained by providing a plating layer on a molded body comprising a thermoplastic elastomer composition.

### CITATION LIST

### PATENT LITERATURE

[Patent Literature 1] JP 2017-126644A
[Patent Literature 2] JP 2018-85391A
[Patent Literature 3] WO 2014/115475A
[Patent Literature 4] JP H11-29663A

### SUMMARY OF INVENTION

### TECHNICAL PROBLEM

However, in the past, conventional soft magnetic material have been processed into thick plate, laminated, and used as a casing to surround the object to sufficiently shield the low frequency region electromagnetic waves having a frequency of 1 MHz or lower. However, these measures were problematic since the shielded portion would become excessively heavy. In order to achieve needs in lighter, thinner, and smaller electronic equipment and lighter electrically driven vehicles, molded body which is effective in shielding low frequency region electromagnetic waves and can comply with thin and complicated shapes of components has been desired.

Accordingly, the present invention provides a molded body having superior shielding performance (masking performance) with respect to low frequency region electromagnetic waves of 1 MHz or lower.

### SOLUTION TO PROBLEM

According to the present invention, a plated molded body comprising: a resin layer of a thermoplastic resin containing soft magnetic powder including Fe-Si-Al alloy; and a coating layer of a conductive metal is provided.

The resin composition of the present invention as a formulation of soft magnetic powder and thermoplastic resin, having shielding performance with respect to low frequency region electromagnetic waves, can be obtained by performing melt-kneading using known internal mixers and extruders within a suitable temperature range which allows the thermoplastic resin to be heated and melt. In addition, by using suitable dice and mold, the melt-kneaded material can be molded into sheet, hose, and other shapes to obtain a molded body. Further, a plated molded body can be obtained by forming a plating layer on the surface of the molded body with known plating method.

Hereinafter, various embodiments of the present invention will be exemplified. The embodiments shown hereinafter can be combined with each other.

Preferably, the conductive metal is copper.

Preferably, when a plated molded body sheet with a thickness of 1.0 mm is measured in accordance with KEC method, attenuation factor of magnetic field component at frequency of 0.3 MHz is 10 dB or more, and attenuation factor of magnetic field component at frequency of 1 MHz is 15 dB or more.

Further, the thermoplastic resin composition can provide a molded body by subjecting the thermoplastic resin under heating and melt-molding processing.

By applying plate processing to this molded body, a plated molded body having a coating layer (plating layer) on the surface thereof is provided.

### EFFECT OF THE INVENTION

According to the present invention, a plated molded body of a thermoplastic resin composition having superior electromagnetic waves shielding performance with respect to low frequency region electromagnetic waves can be provided.

### BRIEF EXPLANATION OF THE DRAWINGS

[FIG. 1] FIG. 1 is a schematic cross-sectional view of a case molded body molded by using a case mold.
[FIG. 2] FIG. 2 is a schematic top view of a case molded body molded by using a case mold.

### EMBODIMENTS OF THE INVENTION

Hereinafter, embodiment for carrying out the present invention will be explained in detail. Here, the embodiments explained hereinafter are only one typical embodiment of the present invention, and thus the scope of the invention shall not be interpreted narrowly.

The plated molded body of the present invention comprises a resin layer of a thermoplastic resin composition including a soft magnetic powder containing Fe-Si-Al alloy powder as main component, and a coating layer of conductive metal. The coating layer is a layer of conductive metal. The coating layer is directly formed on the resin layer or another layer is formed on the resin layer first and then the coating layer is formed on the another layer. In one example, a molded body (resin layer) obtained by heating and melt-molding the thermoplastic resin composition including the soft magnetic powder is subjected to plating with conductive metal (coating layer). In addition, as an example of the molded body, sheet, case, and hose can be mentioned.

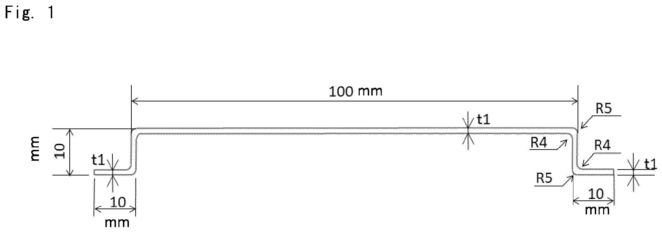

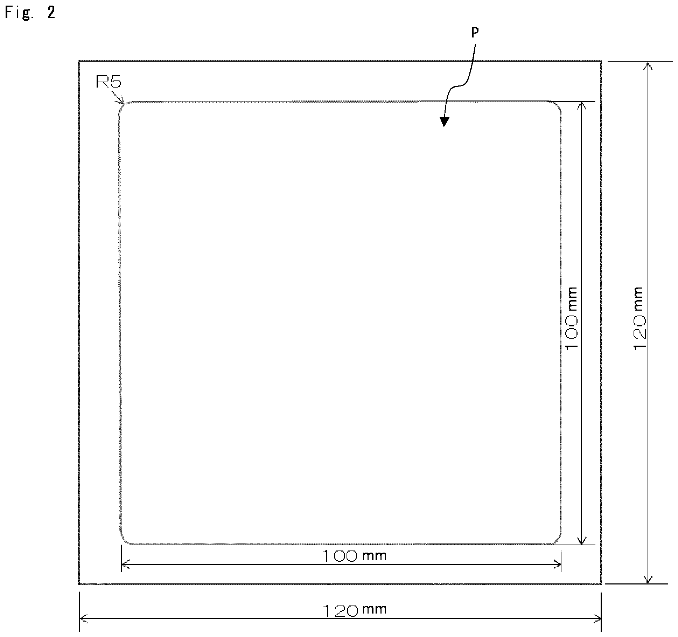

In the present invention, a sheet is molded first, and then the coating layer is formed to obtain a double-side plated sheet. Otherwise, the case molded body shown in Fig. 1 and Fig. 2 is subjected to double-side plating to obtain a plated case, and then a square sheet portion thereof is cut out (hereinafter reworded as plated sheet). These plated sheets having a thickness of 1.0 mm can be used in the KEC measurement.

In the plated molded body of the present invention, attenuation factor of magnetic field component at frequency of 0.3 MHz and 1 MHz (attenuation factor of magnetic field component of electromagnetic waves measured by KEC method with respect to electromagnetic waves having a frequency of 0.3 MHz and 1 MHz using a 1.0 mm thick sheet which is a plated molded body) is preferably 10 dB or more at 0.3 MHz, and 15 dB or more at 1 MHz. The plated molded body of the present invention has superior shielding performance with respect to low frequency region electromagnetic waves of 1 MHz or lower.

The attenuation factor of the magnetic field component at a frequency of 0.3 MHz measured by KEC method with a 1.0 mm thick sheet which is a plated molded body is preferably 10 dB or more, more preferably 15 dB or more, and further preferably 20 dB or more.

The attenuation factor of the magnetic field component at a frequency of 1 MHz measured by KEC method with a 1.0 mm thick sheet which is a plated molded body is preferably 15 dB or more, more preferably 20 dB or more, and further preferably 25 dB or more.

Further, the plated molded body preferably has a shielding performance with respect to electromagnetic waves of 3 MHz and 10 MHz in addition to the shielding performance with respect to electromagnetic waves of 1 MHz or lower. The attenuation factor of the magnetic field component at a frequency of 3 MHz measured by KEC method with a 1.0 mm thick sheet which is a plated molded body is preferably 20 dB or more. The attenuation factor of the magnetic field component at a frequency of 10 MHz measured by KEC method with a 1.0 mm thick sheet which is a plated molded body is preferably 30 dB or more.

The soft magnetic powder is a powder containing Fe-Si-Al alloy having soft magnetism.

The soft magnetic powder preferably contains Fe-Si-Al alloy powder as main component. The soft magnetic powder can contain Fe-Si based alloy powder, Fe-Si-Cr based alloy powder, or other soft magnetic powder to an extent that it does not impair the effect of the present invention. When the Fe-Si-Al alloy powder is contained as the main component, 50 mass% or more of the soft magnetic powder is preferably the Fe-Si-Al alloy powder, and the soft magnetic powder more preferably consists essentially of the Fe-Si-Al alloy powder, and the soft magnetic powder further preferably is the Fe-Si-Al alloy powder.

Fe-Si-Al alloy is an alloy containing Fe, Si, and Al. The composition of the Fe-Si-Al alloy is preferably 3 to 12 atomic% of Si, 4 to 12 atomic% of Al, and the rest being Fe. One compositional example of representative Fe-Si-Al alloy is Fe₈₅Si₁₀Al₅, Fe_{84.7}Si_{9.5}Al_{5.8}, and the like. The content of Si in the Fe-Si-Al alloy is, specifically for example, 3, 4, 5, 6, 7, 8, 9, 10, 11, or 12 atomic%, and can be in the range between the two values exemplified herein. In addition, the content of Al in the Fe-Si-Al alloy is, specifically for example, 4, 5, 6, 7, 8, 9, 10, 11, or 12 atomic%, and can be in the range between the two values exemplified herein. Here, in the present specification, the wave dash symbol "-" is a symbol used to show that the numerical values presented before and after the symbol is included in the numerical range. Specifically, the description of "X ~ Y" ("X to Y", both X and Y represent numerical value) means "X or more and Y or less".

The shape of the soft magnetic powder can be any one of spherical, flat, and irregular, and similar shielding effect can be realized. The soft magnetic powder has a maximum diameter of 500 um, more preferably 100 um, which can be obtained by known screening procedure. Here, the maximum diameter of the powder is the maximum diameter of each particle when the shape of the powder is irregular or flat. When the maximum diameter exceeds 500 um, the electromagnetic waves shielding performance may become ununiform within the molded object, or a defective portion may occur.

The thermoplastic resin composition contains the soft magnetic powder by 20 volume^ to 80 volume%, more preferably by 30 volume^ to 70 volume%. When the content of the soft magnetic powder is less than 20 volume , sufficient electromagnetic waves shielding performance would not be realized, and when the content exceeds 80 volume%, flowability during kneading or molding becomes insufficient, resulting in cases where desired shape cannot be molded. In addition, the kneaded product would become brittle, which is undesirable. The content of the soft magnetic powder in the thermoplastic resin composition is, specifically for example, 20, 25, 30, 35, 40, 45, 50, 55, 60, 65, 70, 75, or 80 volume%, and can be in the range between the two values exemplified herein.

The thermoplastic resin contained in the thermoplastic resin composition is not particularly limited so long as it can undergo electroless plating. The thermoplastic resin can be is at least one selected among polyethylene (PE), polypropylene (PP), polystyrene (PS), ABS resin, polyvinyl chloride (PVC), polyvinylidene chloride (PVDC), ethylene-vinyl acetate resin (EVA), polyurethane (PU), acrylic resin (PMMA), polycarbonate (PC), polyamide (PA), polyimide (PI), polyphenylene sulfide (PPS), polyvinylidene fluoride (PVDF), polytetrafluoroethylene (PTFE), polybutylene terephthalate (PBT), nylon, polyphenylene ether (PPE), liquid crystal polymer (LCP), and modified resin thereof. The thermoplastic resin can also be a polymer alloy of a plurality of these resins. In terms of the ability to disperse the soft magnetic powder and to obtain uniform electromagnetic waves shielding performance, ABS resin, polyvinyl chloride, acrylic resin, ethylene-vinyl acetate resin and the like may be preferable.

So long as it does not significantly impair the electromagnetic waves shielding performance in the low frequency region, processing auxiliary and various compounding agent can be added. When the processing auxiliary is added, the processing auxiliary is added preferably by 0.1 mass% to 1 mass%, more preferably 0.3 to 0.5 mass% with respect to total sum of the thermoplastic resin and the soft magnetic powder. As the processing auxiliary, polyethylene glycol fatty acid ester and the like can be mentioned.

As the kneading method, known melt-kneader such as internal mixer and extruder can be used. As the kneading temperature and the kneading time, suitable known conditions for kneading and molding can be selected for each of the thermoplastic resin. To improve dispersibility of the soft magnetic powder, it is preferable to adopt high-speed rotation conditions and high-shear conditions to an extent that notable deterioration of thermoplastic resin and fragmentation of soft magnetic powder does not occur. Further, kneading of the soft magnetic powder can be performed by adding the soft magnetic powder with the thermoplastic resin simultaneously, or the soft magnetic powder can be added after heating and melting the thermoplastic resin or during heating and melting the thermoplastic resin (later addition). The order of addition can be arbitrarily selected in terms of improvement in dispersibility and suppression in resin deterioration.

The thermoplastic resin composition formulated with the soft magnetic powder thus obtained (molding raw material) is molded into a desired shape by using hot press or melt extruder, with suitable dice or mold. As such shape, sheet, hose, and case-shape can be mentioned for example. The molding raw material can be molded into various shapes by selecting the mold. In addition, laminated sheet can be made by using a plurality of extruders, and laminate sheet with a plurality of layers can be made by using adhesive and the like.

The molded article can be a molded member used for shielding low frequency region electromagnetic waves of various equipment. In one example, the molded article is processed into sheet as described above. Here, when the sheet is structured with a plurality of layers, the shielding effect may be enhanced even with the same thickness. In one embodiment of the present invention, high shielding effect can be expected when the sheet is structured with a plurality of layers, also. On the other hand, in the present invention, even with an embodiment in which the sheet and the like are structured with single layer, sufficient shielding effect can be achieved.

The method for plating the molded body comprising the thermoplastic resin composition is not particularly limited. Here, electroless plating is preferable. As the metal component of the plating layer, copper is preferable in terms of cost, stability, and conductivity. The thickness of the copper plating layer is 0.05 to 20 um, preferably 0.1 to 10 µm, and further preferably 0.1 to 5 um. In the electroless plating, alloy powder is cleaned to activate the surface thereof, and then added to an aqueous solution containing a complexing agent and a reducing agent. A copper salt is further added to this solution in a dropwise manner, and electroless plating is performed.

As the complexing agent, for example, ammonia aqueous solution, aminocarboxylates such as ethylenediamine tetraacetic acid (EDTA), diethylenetriamine pentaacetic acid (DTPA), triethylene tetetramine hexaacetic acid (TTHA), hydroxyethyl ethylenediamine triacetic acid (HEDTA), nitrilotriacetic acid (NTA), and iminodiacetic acid (IDA); polyamines such as ethylenediamine, tetramethylenediamine, hexamethylenediamine, diethylenetriamine, tetraethylenepentamine, and pentaethylenehexamine; aminoalcohols such as monoethanolamine, diethanolamine, and triethanolamine; oxycarboxylates such as citric acid, tartaric acid, lactic acid, malic acid; thioglycolic acid; and glycine can be mentioned.

As the reducing agent, borohydrides, amineboranes, hypophosphites, phosphites, aldehydes, ascorbic acids, hydrazines, polyvalent phenols, polyvalent naphthols, phenol sulfonic acids, and naphthol sulfonic acids can be mentioned for example.

As a soluble copper salt, copper sulfate; copper oxide; copper chloride; copper pyrophosphate; copper carbonate; or copper carboxylates such as copper acetate, copper oxalate, and copper citrate; or copper organic sulfonates such as copper methane sulfonate and copper hydroxyethane sulfonate can be mentioned for example.

In the present invention, the plating layer as described above is formed on the surface layer of the molded body comprising the thermoplastic resin composition as the substrate. Here, in terms of realizing stable electromagnetic waves shielding performance at the entire surface of the molded body, it is preferable to form the plating layer uniformly. If desired, an electroless plating layer or an electrolytic plating layer can be multilayered on this plating layer.

As a method for evaluating the electromagnetic wave noise shielding performance (blocking performance), KEC method developed by general foundational juridical person KEC Electronic Industry Development Center (KEC) is known. For example, this method is described in Journal of the Japan Research Association for textile end-uses (Sen-sho-shi) Vol. 40, No.2 (1999) and "https://www.kec.jp/testing-division/kec-method/". The KEC method is a method which measures the shielding effect of the electromagnetic waves generated in the near field separated into electric field component and magnetic field component. The electromagnetic waves transmitted from the transmitting antenna (transmitting jig) is received with the receiving antenna (receiving jig) via a sheet-shaped measurement sample, and the attenuated electromagnetic waves are measured to perform quantification as attenuation factor (measurement unit: dB). In the present invention, under room temperature conditions, sample with uniform thickness (thickness after double-side plating being 1.0 mm) was used to measure the attenuation factor of the magnetic field component in the frequency range of 0.1 MHz to 1000 MHz. Here, the electromagnetic waves shielding performance (magnetic field component) with respect to frequency in the range of 1 MHz or lower, which is important in the present invention, was evaluated by comparing the measured attenuation factors for 0.3 MHz and 1 MHz.

### EXAMPLE

Hereinafter, the effect of the present invention will be explained with reference to Examples and Comparative Examples of the present invention.

### [Examples 1 to 3]

In accordance with the compositions shown in Table 1, resin composition formulated with Fe-Si-Al alloy powder was prepared. As the alloy powder, Fe-Si-Al alloy powder having an average particle diameter of 50 um (available from Sanyo Special Steel Co., Ltd., FME3D-AH, specific gravity of 6.9, Si content of 9.6 atomic%, Al content of 5.9 atomic^, rest being Fe) was used. As the thermoplastic resin, ABS resin (ABS resin ME, available from Denka Company Limited, specific gravity of 1.04) was used. As the kneading machine, Labo Plastomill available from Toyo Seiki Seisaku-sho, Ltd. (60 mL capacity) was used. ABS resin alone was first kneaded preliminarily under conditions of rotation number of 20 rpm at 210 °C for 3 minutes, followed by addition of the alloy powder of the present invention and kneading under conditions of rotation number of 50 rpm at 210 °C for 10 minutes to obtain an alloy powder containing resin composition (hereinafter simply referred to as composition) having the charging composition as shown in Table 1. The composition was then melt-molded using a hot press set at 210 °C and a sheet mold having a thickness of 1 mm, thereby preparing a square molded sheet of 120 mm x 120 mm in length and width and 1.0 mm thickness.

Copper plating to the molded sheet having 1.0 mm thickness was performed with the following procedure. The molded sheet prepared by the afore-mentioned procedure was immersed in 5 mole/L aqueous potassium hydroxide for 5 minutes at 50 °C and was rinsed thoroughly with purified water. Separately, a copper-ammine complex solution used for electroless plating of copper was prepared in accordance with the following procedure. Copper sulfate pentahydrate necessary to prepare 0.2 mole/L solution was measured and was first dissolved in 300 ml of purified water, followed by addition of 400 ml of 25% ammonia aqueous solution. The solution was diluted in a measuring cylinder to 1L with purified water to obtain a copper-ammine complex solution containing 10% ammonia aqueous solution and 0.2 mole/L copper sulfate. This procedure was repeated 3 times to prepare 3L of copper-ammine complex solution in total. The square sheet described above was immersed in the copper-ammine complex solution for 5 minutes to allow adsorption of copper ion and was then rinsed with purified water. Subsequently, the square sheet was immersed in a 0.05 mole/L sodium borohydride aqueous solution at 25 °C for 5 minutes to reduce the copper ion adsorbed on the surface of the molded sheet comprising the alloy powder containing resin composition and to allow deposition of metal copper coating on both sides of the sheet. Thereafter, the molded sheet having the copper coating formed thereon was subjected to heat treatment for 2 hours under nitrogen gas atmosphere at 110 °C. Accordingly, the plated molded body of the present invention was finally obtained. SEM observation of the cross section of the molded sheet showed that the thickness of the copper plating was 0.40 um each.

### [Examples 4 to 6]

Procedures were carried out in a similar manner as Examples 1 to 3, except for the square sheet having a thickness of 1.0 mm was immersed in copper-ammine complex solution for 10 minutes. The thickness of the copper plating was 0.57 um each.

### [Comparative Examples 1 to 3]

Procedures were carried out in a similar manner as Examples 1 to 3, except for the molded sheet of 120 mm x 120 mm in length and width and 1.0 mm thickness before copper plating was used.

The electromagnetic waves shielding performance (magnetic field component) of the molded sheet of Examples and Comparative Examples were measured at "general foundational juridical person KEC Electronic Industry Development Center (Seika-cho, Soraku District, Kyoto Prefecture)". The values were obtained by using the apparatus shown in Fig. 7 and sandwiching the molded sheet with a pair of magnetic field shielding effect evaluation cell (Fig. 6) as shown in "Journal of the Japan Research Association for textile end-uses (Sen-sho-shi) Vol. 40, No.2 (1999)" at the Center. Here, the applied frequency during the measurement was gradually increased ranging from 0.1 MHz to 1000 MHz. The attenuation factor (relative value) calculated from the transmitting/receiving strength value at 0.3 MHz and 1 MHz were used as the values which represent the magnetic field shielding effect of the present invention. The results are shown in Tables 1 and 2. The copper plated molded body of the soft magnetism powder containing resin composition showed attenuation factor of 10 dB or more for a frequency of 0.3 MHz, and attenuation factor of 15 dB or more for frequency of 1 MHz. Accordingly, superior electromagnetic waves (magnetic field component) shielding performance was achieved. Here, in Table 1 and Table 2, the attenuation factors for frequency of 3 MHz and 10 MHz are also shown. The plated molded body of the present invention showed improved attenuation factor even in the frequency region exceeding 1 MHz. Accordingly, superior shielding performance is achieved. From comparison with molded bodies without copper plating (Comparative Examples 1 to 3), it can be understood that electromagnetic waves shielding performance (magnetic field component) is improved by 3 dB or more for frequency of 0.3 MHz, and 10 dB or more frequency of 1 MHz.

**[Table 1]**

| | Example | | | | | | |
|---|---|---|---|---|---|---|---|
| | 1 | 2 | 3 | 4 | 5 | 6 | 7 |
| ABS resin (volume%) | 80 | 70 | 60 | 80 | 70 | 60 | 80 |
| Fe-Si-Al alloy powder (volume%) | 20 | 30 | 40 | 20 | 30 | 40 | 20 |
| polyethylene glycol fatty acid ester (weight%) | - | - | - | - | - | - | 0,3 |
| kneading machine | Labo Plastomill | Labo Plastomill | Labo Plastomill | Labo Plastomill | Labo Plastomill | Labo Plastomill | single-screw extruder |
| sheet thickness | 1.0mm | 1.0mm | 1.0mm | 1.0mm | 1.0mm | 1.0mm | 1.0mm |
| copper plating thickness | 0.40µm | 0.40µm | 0.40µm | 0.57µm | 0.57µm | 0.57µm | 0.57µm |
| [electromagnetic wave shielding performance (magnetic field)] | | | | | | | |
| KEC method (magnetic field) measurement value | | | | | | | |
| attenuation factor at 0.3 MHz [dB] | 10,6 | 12,3 | 17,0 | 13,8 | 16,0 | 22,1 | 14,8 |
| attenuation factor at 1 MHz [dB] | 17,0 | 18,7 | 24,2 | 20,8 | 23,4 | 32,4 | 21,7 |
| attenuation factor at 3 MHz [dB] | 24,6 | 28,1 | 28,9 | 26,0 | 28,4 | 29,0 | 26,3 |
| attenuation factor at 10 MHz [dB] | 37,8 | 47,0 | 47,7 | 38,4 | 47,3 | 47,8 | 38,5 |

**[Table 2]**

| | Comparative Example | | | | | | | | |
|---|---|---|---|---|---|---|---|---|---|
| | 1 | 2 | 3 | 4 | 5 | 6 | 7 | 8 | 9 |
| ABS resin (volume%) | 80 | 70 | 60 | 80 | 100 | 100 | 100 | 90 | 10 |
| Fe-Si-Al alloy powder (volume%) | 20 | 30 | 40 | 20 | | | | 10 | 90 |
| polyethylene glycol fatty acid ester (weight%) | - | - | - | 0,3 | - | - | - | - | - |
| kneading machine | Labo Plastomill | Labo Plastomill | Labo Plastomill | single-screw extruder | Labo Plastomill | Labo Plastomill | Labo Plastomill | Labo Plastomill | Labo Plastomill |
| sheet thickness | 1.0mm | 1.0mm | 1.0mm | 1.0mm | 1.0mm | 1.0mm | 1.0mm | 1.0mm | sheet not obtained |
| copper plating thickness | (not performed ) | (not performed ) | (not performed ) | (not performed ) | (not performed ) | 0.40µm | 0.57µm | - (not performed ) | |
| [electromagnetic wave shielding performance (magnetic field)] | | | | | | | | | |
| KEC method (magnetic field) measurement value | | | | | | | | | |
| attenuation factor at 0.3 MHz [dB] | 7,2 | 8,3 | 11,8 | 7,7 | 0,1 | 1,7 | 2,6 | 4,6 | - |
| attenuation factor at 1 MHz [dB] | 7,7 | 9,1 | 13,9 | 8,4 | 0,2 | 2,2 | 3,0 | 5,3 | - |
| attenuation factor at 3 MHz [dB] | 7,7 | 9,0 | 13,8 | 8,3 | 0,1 | 2,4 | 3,3 | 5,1 | - |
| attenuation factor at 10 MHz [dB] | 7,8 | 9,0 | 13,8 | 8,4 | 0,1 | 2,7 | 3,4 | 5,0 | - |

### [Example 7, Comparative Example 4]

A single-screw extruder with kneading mechanism having a barrel diameter of 30 mm and L/D=16 was used. A T-die having a slit of 1 mm and width of 200 mm was attached at the tip portion. The temperature of the barrel was set to 170 to 210 °C, and the rotation number was 35 rpm. A predetermined amount of ABS resin (ME available from Denka Company Limited), processing auxiliary (polyethylene glycol fatty acid ester (EMANON 1112, available from Kao Corporation)), and Fe-Si-Al alloy powder having average particle diameter of 53 um (available from Sanyo Special Steel Co., Ltd.) as the similar soft magnetic powder were charged, thereby obtaining a sheet-shaped molded object of the resin composition kneaded with the soft magnetic powder. Here, the processing auxiliary was added so that the amount of the processing auxiliary would be 0.3 weight% with respect to total weight of EVA resin and Fe-Si-Al alloy powder. Subsequently, the sheet-shaped molded object was cut into 120 mm x 120 mm. A hot pressing machine and a mold for forming shielding case were preheated to 210 °C and the cut out sheet-shaped molded object was inserted between the upper plate and the lower plate of the mold. After allowing to stand for 3 minutes, the lower plate was gradually elevated to apply pressure, and the molded object was finally maintained under 20 MPa pressure for 10 minutes, thereby molding the molded object. Thereafter, the mold for shielding case was taken out and transferred to a water-cooled cooling pressing machine and was allowed to cool for 10 minutes. After cooling, the shielding case molded body (Fig. 1, Fig. 2) was taken out of the mold. The thickness t1 in Fig. 1 is 1 mm. The height of the case molded body is 10 mm as shown in Fig. 1.

By using this molded body, copper plating was performed on the entire surface of the molded body by the same conditions as Examples 4 to 6, thereby obtaining the plated molded body of the present invention. A planar portion (100 mm x 100 mm) of the plated molded body was cut out and the electromagnetic waves shielding performance measurement was performed by the same procedure as Example 1. The result of measurement of the magnetic field component is shown in Example 7 of Table 1. Further, a planar portion (100 mm x 100 mm) of the shielding case molded body before performing copper plating was cut out and the electromagnetic waves shielding performance was measured (magnetic field component). The result is shown in Comparative Example 4 of Table 2. The plated molded body of the present invention showed attenuation factor of 10 dB or more at frequency of 0.3 MHz, and showed attenuation factor of 15 dB or more at frequency of 1 MHz. Accordingly, it is apparent that the plated molded body of the present invention has superior shielding performance with respect to electromagnetic waves in low frequency region.

### [Comparative Examples 5 to 9]

Comparative Example 5 was not formulated with Fe-Si-Al alloy powder of the present invention, and copper plating was not performed either. The attenuation factor was only 0.1 to 0.2 dB, and thus showed only little electromagnetic waves shielding performance. In Comparative Examples 6 to 7, copper plating was performed to the thermoplastic resin sheet which was not formulated with Fe-Si-Al alloy powder of the present invention. By performing copper plating, the electromagnetic waves shielding performance was improved by 2 to 3 dB, however, significant improvement in the shielding performance was not observed. In Comparative Example 8, Fe-Si-Al alloy powder was formulated by an amount of 10 volume%, however, copper plating was not performed. The attenuation factor at 0.3 MHz and 1 MHz were about 5 dB. In Comparative Example 9, Fe-Si-Al alloy powder was formulated by 90 volume%. The molded object was extremely brittle and was not able to maintain the sheet form. Accordingly, measurement by KEC method was unable to perform. From these results, it is apparent that the plated molded body of the thermoplastic composition formulated with Fe-Si-Al alloy powder of the present invention has superior electromagnetic waves shielding performance at low frequency region of 1 MHz or lower.

### INDUSTRIAL APPLICABILITY

The plated molded body of the present invention which is obtained by plating conductive metal on the molded body of the thermoplastic resin composition formulated with soft magnetic powder has superior shielding performance with respect to electromagnetic wave noise in the low frequency region of 1MHz or lower, and is thus extremely useful in the industry.

### EXPLANATION OF SYMBOLS

P: planar portion

## Claims

1. A plated molded body, comprising:
a resin layer of a thermoplastic resin containing soft magnetic powder including Fe-Si-Al alloy; and
a coating layer of a conductive metal.

2. The plated molded body of Claim 1, wherein the conductive metal is copper.

3. The plated molded body of Claim 1 or 2, wherein:
when a plated molded body sheet with a thickness of 1.0 mm is measured in accordance with KEC method,
attenuation factor of magnetic field component at frequency of 0.3 MHz is 10 dB or more, and attenuation factor of magnetic field component at frequency of 1 MHz is 15 dB or more.

4. The plated molded body of any one of Claims 1 to 3, wherein the resin layer is a molded body obtained by heating and melt-mold processing the thermoplastic resin composition.
